# EUROPEAN PATENT SPECIFICATION

(11) **EP 2 248 611 B1**
(45) Date of publication and mention of the grant of the patent: **04.01.2012**
(21) Application number: 10425152.5
(22) Date of filing: 05.05.2010
(51) Int. Cl.: B21D 7/14, G05B 19/19, B21D 7/08

(54) **A machine for continuously bending an elongated workpiece at predetermined radii**
Biegemaschine zum Biegen eines länglichen Werkstückes nach vorbestimmten Krümmungsradien
Dispositif de cintrage pour cintrer un élément allongé selon des rayons de courbure prédéfinis

(30) Priority: 06.05.2009 IT RM20090215
(43) Date of publication of application: 10.11.2010
(73) Proprietor: CML International S.P.A., 03030 Piedimonte San Germano (FR) (IT)
(72) Inventor: Capobusso, Alessandro, 03030 Piedimonte San Germano (FR) (IT); Schiarante, Eugenio, 36077 Altavilla Vicentina (VI) (IT); Roso, Giuseppe, 37047 Schio (VI) (IT); Rea, Silvio, 03033 Arpino (FR) (IT)
(74) Representative: Cipriani, Guido

(56) References cited:
- EP-A- 0 767 016
- EP-A- 1 342 514
- WO-A-2005/005071
- DE-A1- 3 519 382

## Description

The present invention relates to a machine for continuously bending an elongated workpiece at predetermined radii according to the preamble of claim 1. In the following reference is made to a pyramidal roller bending machine; however this should not be understood as limiting the scope of the present invention.

The European patent application EP 1 644 140 (WO 2005 00 5071) in the name of ORTIC AB of Borlänge (Sweden) describes a method of process monitoring and controlling for continuous bending of an elongated workpiece to a predetermined radius by using three parallel contact-free distance meters of the laser transmitter type and by measuring the distances to the bent surface on the workpiece, by calculating the actual radius of curvature based on the fixed distances between the meters and the measured distances, and adjusting the bending machine in response to the relation between the calculated actual radius and the desired radius.

As above said, the cited patent requires three laser devices, a mounting arrangement of the three laser devices, and a co-ordinating and control circuit for the three laser devices. Further, since very large radii of curvature such as those of bent sheet are measured, the three laser devices are positioned at a high fixed distance of about 200 mm one from the other and very far from the exit point of the sheet from the last roller of the machine. These distances would not be acceptable for a bending machine according to the present invention whose aim is to check the curvature of pipes having quite small radii of curvature with respect to those of the cited patent, and in a point very near to the exit of the last roller.

Consequently, a main object of the invention is to permit a radius of curvature measuring in a bend section that is bent by a single device that does not suffer drawbacks connected to the mounting of a plurality of devices. In order to achieve this object, the present inventors have noticed that a detecting device that is to-day used for a different function, i.e. simultaneously measuring several points of a workpiece being scanned, could be helpful.

It is a high-accuracy 2D laser displacement sensor such as that of the LJ-G series sensor produced by KEYENCE CORPORATION of Osaka (Japan). The series LJ-G accurately captures the surface profile of any material in two directions. As currently used, such a displacement sensor is just displaced over the object for simultaneously measuring in various measuring ways, among which that one of comparing profiles.

The present inventors had the idea of using the displacement sensor keeping it still so that the laser beam thereof intersects longitudinally the moving workpiece to be measured while it is buckled by a bending machine. Thereby, the displacement sensor is able to determine the radius of curvature of an elongated workpiece being bent by contemporaneously measuring at least three points. This information is used to be compared with a radius that should be actually obtained on the elongated workpiece so that the desired adjustments can be made by the machine in a manner to obtain the bending of a pipe or sections different from a pipe by one pass or more.

Therefore, the present invention provides a machine for continuously bending an elongated workpiece at predetermined radii, machine that uses a series of driving rollers for bending, and a computer that is coupled among other to a distance laser meter for calculating a radius of a bend section and comparing the calculated radius of curvature with the desired radius of curvature in said bend section, the computer being coupled also to a length meter for measuring a length of said bend section concentrically to the elongated workpiece, and to operating means adapted to operate a roller of the series of driving rollers for bending in order to adjust it in real time on the base of a difference between said measured radius of curvature and the desired radius of curvature in said bend section, characterised in that said distance laser meter is a high-accuracy 2D laser displacement sensor for measuring the radius of curvature of the elongated workpiece downstream said series of driving rollers, for bending.

In addition to the advantage of obtaining a more accurate correction value particularly with reference to bending operations designed to obtain bend sections having variable curvature radii, the machine according to the present invention, with respect to the prior art, has the advantage of not requiring a plurality of distance meters, such as three laser transmitters, but only one. Thus, a consequent cost saving as well as a reading nearer to the exit of the pipe from the last roller is achieved.

Further, with respect to the three-point contact distance meters there are various advantages, the most important of which is a greater accuracy, since the measurement is executed in a very small range of bend section and in one direction, from one emission point, the nearest one to the exit of the pipe from the last roller.

Another advantage of the invention is that the radius of curvature measuring device makes relative and not absolute measurements, whereby the measuring device can be mounted on a movable equipment such as the third roller of the pyramidal bending machine in the feeding direction of the pipe.

A further advantage is that the measuring device can rotate about a hub of the third roller in order to be positioned for striking the pipe in a zone just downstream the third roller. Thereby, the radius of curvature of the just bent pipe section is measured, and the displacement of the deforming roller can be feedback changed in the point nearest to the deformation point of the pipe in order to conform the radius of curvature being obtained to the desired one in single preset pipe sections.

The present invention will be described with reference to a preferred embodiment thereof with connection to the enclosed drawing, in which:

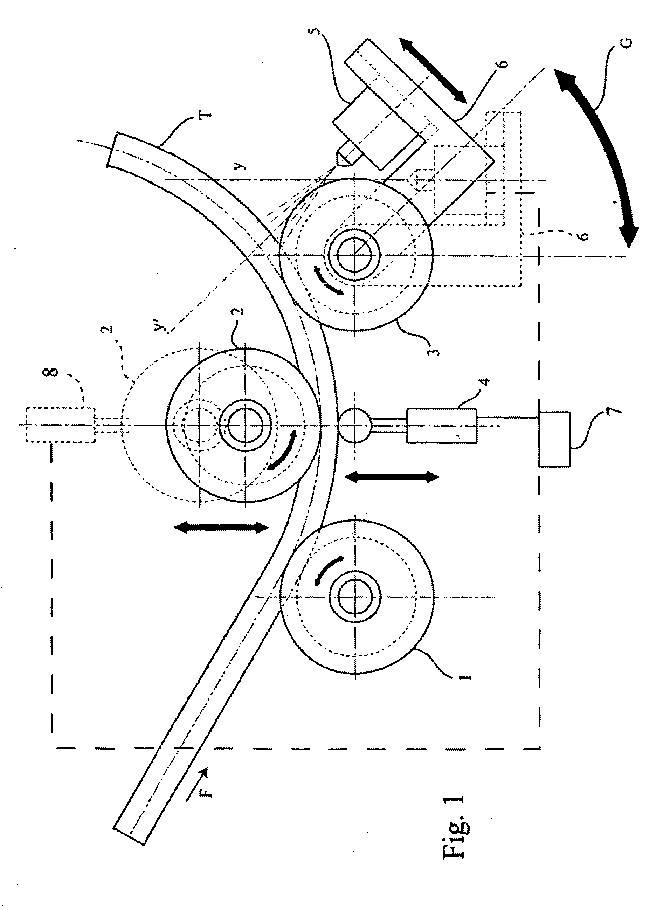

Figure 1 shows very diagrammatically and in partial manner a side view of a bending machine able to continuously bend an elongated workpiece along predetermined radii according to the present invention.

Referring to Figure 1, the machine on which the invention is embodied by way of an example is a bending and forming machine comprising a series of three driving rollers 1, 2, and 3, for bending at least one of them being a deforming roller. An elongated workpiece to be bent, e.g. a pipe T, is fed through the driving rollers along a direction indicated by an arrow F. For description convenience the rollers 1 and 3 are fixed in their position, while the roller 2 is adjustable in its vertical position and can be controlled by the machine to move on the base of a feedback control in the vertical direction with respect to the rollers 1 and 3. An encoder (not shown) is associated to the roller 2 adjustable in the vertical direction, and an encoder for measuring the feeding of the tube T through the series of rollers 1, 2, and 3, is indicated as 4.

A 2D laser displacement sensor as a contact-free meter is indicated generally at 5, that is pivotally mounted in a support 6 being connected to the hub of the roller 3, e.g. a high-accuracy 2D laser displacement sensor of the above cited type. However, an aiming direction y of the 2D laser displacement sensor 5 is represented by a dash line vertical to the plane of the sheet. However, the aiming direction can be suitably selected also in dependence of the radius of the pipe exiting the roller 3, preferably in order to approach as near as possible the exit point from the roller 3, e.g. along the line that is indicated as y' in Figure 1. An arrow G in the figure indicates that the support 6 sustaining the 2D laser displacement sensor 5 can be adjusted in its swinging.

The machine according to the described diagram further comprises a schematically shown central computer 7 for data controlling and processing, whose task is to create a correspondence between the machine movements and the desired bend drawing that can be also graphically inserted through a video device (not shown), possibly also of a "touch screen" type. This correspondence occurs by means of a digital analog device I/O and a signal conditioner, which has the function of filtering and stabilising digital analog signals that arrive from various mechanical, hydraulic and electronic components of the machine. These components are known and then are neither shown, nor described. Only an operating means of the roller 3, e.g. a hydraulic cylinder, is indicated at 8.

The machine can operate by a method already described in an earlier patent application No. RM2008A000078 of the same inventors.
When a feedback according to the present invention is used on the base of the change in height of the roller 2 and the measurement of the laser meter 5, a sequence of points belonging to the bend in subsequent detection is constructed.

The bend is defined through a succession of third order polynomial functions. Such functions, that are B-splines and Bézier curves interpolating the detected points, need at least three contemporaneous points to be mathematically defined. The points are obtained by the sole laser measuring device.

The calculation of the radius of curvature of each bend section of the elongated workpiece is made for obtaining a radius of curvature of a bend section by a machine employing a laser displacement sensor of the type produced by Keyence series LJ-G measuring at least three contemporaneous points, but by means of a sole laser meter in one direction.

The measurement method above described can be applied as follows. By knowing in any case a single point of measurement, both an orientation of the bend or bends as produced and any correction to be made when the material used is changed or by mechanical modifications occurring in the working phases, can be measured with accuracy.

The machine permits the automatic compensation both of errors due to the elastic characteristic of the material used and any electromechanical variations occurring when different components are used, and due to wear of the same components.
A fitting procedure of the elongated workpiece as controlled by the laser meter allows the waste of material in the production to be decreased automatically. The same procedure permits one person to decide autonomously the fitting length of the material. It is clear that all the errors due to the positioning of the material to be worked on the machine are annulled.
Further, the one reading point has the advantage of increasing far the ease of operation of the machine.
The machine allows a plurality of consecutive pipes to be worked in order to obtain very long arcs.
In the precedent description, the machine in which the present invention is embodied is a bending machine whose upper roller 2 is the deforming roller.

It should be understood that modifications and changes to the machine can be provided, all not departing from the scope of the invention according to the enclosed claims.

## Claims

1. A machine for continuously bending an elongated workpiece at predetermined curvature radii, machine that uses a series of driving rollers (1, 2, 3) for bending, and a computer (7) that is coupled among other to a distance laser meter for calculating a radius of a bend section and comparing the calculated radius of curvature with the desired radius of curvature in said bend section, the computer (7) being coupled also to a length meter (4) for measuring a length of said bend section concentrically to the elongated workpiece (T) and to operating means (8) adapted to operate a roller (2) of the series of driving rollers (1, 2, 3) for bending in order to adjust it in real time on the base of a difference between said measured radius of curvature and the desired radius of curvature in said bend section, **characterised in that** said distance laser meter is a high-accuracy 2D laser displacement sensor (5) for measuring the radius of curvature of the elongated workpiece (T) downstream said series of driving rollers (1, 2, 3) for bending.

2. The machine according to claim 1, **characterised in that** said length meter (4) is an encoder.

3. The machine according to claim 1, **characterised in that** said 2D laser displacement sensor (5) is fixed in its position in such a way that its measurement direction crosses the elongated workpiece near an exit roller of the series of driving rollers (1, 2, 3) for bending.

## Patentansprüche

1. Eine Maschine zum kontinuierlichen Biegen eines länglichen Werkstücks in vorgegebene Krümmungsradien, eine Maschine, welche eine Reihe von Antriebsrollen (1, 2, 3) zum Biegen verwendet, sowie einen Computer (7), der unter Anderem an ein Laserabstandsmessgerät zum Berechnen eines Radius eines Krümmungsabschnitts und zum Vergleichen des berechneten Krümmungsradius mit dem gewünschten Krümmungsradius des Krümmungsabschnitts gekoppelt ist, wobei der Computer (7) auch an ein Längenmessgerät gekoppelt ist, um eine Länge des Krümmungsabschnitts konzentrisch zum länglichen Werkstück (T) zu messen, sowie an eine Steuerungsvorrichtung (8), welches dazu angepasst ist, um eine Rolle (2) aus der Reihe der Antriebsrollen (1, 2, 3) zu betreiben, welche die Biegung durchführt, um es in Echtzeit auf Basis einer Differenz zwischen dem gemessenen Krümmungsradius und dem gewünschten Krümmungsradius in dem Krümmungsabschnitt auszugleichen, **dadurch gekennzeichnet, dass** das Laserabstandsmessgerät ein Hochpräzisions-2D-Laser-Wegsensor (5) zum Messen des Krümmungsradius des länglichen Werkstücks, abwärts der Reihe von Antriebsrollen (1, 2, 3) zum Biegen, ist.

2. Die Maschine nach Anspruch 1, **dadurch gekennzeichnet, dass** das Längenmessgerät (4) ein Encoder ist.

3. Die Maschine nach Anspruch 1, **dadurch gekennzeichnet, dass** der 2D-Laser-Wegsenser (5) auf eine solche Weise in seiner Position befestigt ist, dass seine Messrichtung das längliche Werkstück nahe einer Auslaufrolle der Reihe der Antriebsrollen (1, 2, 3) zum Biegen schneidet.

## Revendications

1. Machine pour cintrer de manière continue une pièce allongée à des rayons de courbure prédéterminés, la machine utilisant une série de galets d'entraînement (1, 2, 3) pour le cintrage, et un ordinateur (7) qui est couplé entre autres à un dispositif de mesure de distance laser pour calculer un rayon d'une section de cintrage et comparer le rayon de courbure calculé avec le rayon de courbure souhaité dans ladite section de cintrage, l'ordinateur (7) étant couplé également à un dispositif de mesure de longueur (4) pour mesurer une longueur de ladite section de cintrage de manière concentrique par rapport à la pièce allongée (T) et à des moyens de commande (8) adaptés pour faire fonctionner un galet (2) de la série de galets d'entraînement (1, 2, 3) pour le cintrage afin de l'ajuster en temps réel en fonction d'une différence entre ledit rayon de courbure mesuré et le rayon de courbure souhaité dans ladite section de cintrage, **caractérisée en ce que** ledit dispositif de mesure de distance laser est un capteur de déplacement laser 2D haute précision (5) pour mesurer le rayon de courbure de la pièce allongée (T) en aval de ladite série de galets d'entraînement (1, 2, 3) pour le cintrage.

2. Machine selon la revendication 1, **caractérisée en ce que** ledit dispositif de mesure de longueur (4) est un encodeur.

3. Machine selon la revendication 1, **caractérisée en ce que** ledit capteur de déplacement laser 2D (5) est fixé dans sa position de sorte que sa direction de mesure coupe la pièce allongée à proximité d'un galet de sortie de la série de galets d'entraînement (1, 2, 3) pour le cintrage.
